# EUROPEAN PATENT SPECIFICATION

(11) **EP 3 177 159 B1**
(45) Date of publication and mention of the grant of the patent: **01.04.2020**
(21) Application number: 14830799.4
(22) Date of filing: 23.12.2014
(51) Int. Cl.: A23L 21/00, A23L 21/10, A23L 21/25, A23L 19/00, A23C 19/09, A23G 1/30, A23G 1/54

(54) **KIT OF PARTS CONTAINING A CHEESE FOOD PRODUCT AND A NATURAL FOOD PREPARATION**
SET MIT EINEM KÄSEPRODUKT UND EINER NATÜRLICHEN LEBENSMITTELZUBEREITUNG
KIT D'ÉLÉMENTS CONTENANT UN PRODUIT ALIMENTAIRE FROMAGER ET UNE PRÉPARATION ALIMENTAIRE NATURELLE

(30) Priority: 29.04.2014 EP 14425049
(43) Date of publication of application: 14.06.2017
(73) Proprietor: defood S.r.l., 20123 Milan (IT)
(72) Inventor: BERETTA, Marco, 20135 Milano (IT); SUARDI, Paola, 20135 Milano (IT)
(74) Representative: Zambardino, Umberto
(86) International application number: PCT/EP2014/003469
(87) International publication number: WO 2015/165482

(56) References cited:
- EP-A1- 1 417 891
- EP-A1- 1 929 882
- DE-A1- 1 782 652
- DE-A1- 19 819 216
- DE-A1-102011 106 282
- DE-U1-202012 004 688
- FR-A1- 2 867 951
- GB-A- 316 850
- JP-A- H02 186 938
- KR-B1- 101 249 106
- US-A- 5 194 283
- US-A1- 2004 009 266
- US-A1- 2008 038 440
- US-A1- 2010 055 257
- Anonymous: "Cara's Creature Comforts: March 2012", , 1 January 2012 (2012-01-01), XP055139053, Retrieved from the Internet: URL:http://carascreaturecomforts.blogspot. de/2012_03_01_archive.html [retrieved on 2014-09-09]
- Sarah Paterson-Farrand: "Zoe's Lunchbox: First Day of Preschool", , 5 September 2013 (2013-09-05), XP055139436, Retrieved from the Internet: URL:http://www.zoeslunchbox.com/2013/09/fi rst-day-of-preschool.html [retrieved on 2014-09-10]
- Anonymous: "GNPD - Baked-Camembert Cheese Snacks", , 1 July 2008 (2008-07-01), XP055139164, Retrieved from the Internet: URL:http://www.gnpd.com/sinatra/recordpage /941118/from_search/4aDEvrEP9Q/ [retrieved on 2014-09-09]
- "La Ginja: bebida típica de Óbidos.", , 8 April 2014 (2014-04-08), XP054975939, Retrieved from the Internet: URL:https://www.youtube.com/watch?v=BuOpUE g0UbU [retrieved on 2014-06-24]
- Anonymous: "Australian Honey", , 1 March 2013 (2013-03-01), XP55198455, Retrieved from the Internet: URL:www.gnpd.com [retrieved on 2015-06-25]
- Anonymous: "White Chocolate Product Description Annotations (Record ID: 1901225)", , 1 October 2012 (2012-10-01), XP055198566, Mintel (GNPD) Retrieved from the Internet: URL:www.gnpd.com [retrieved on 2015-06-26]

## Description

The present invention generally relates to a kit of parts comprising at least a food product with a hollow three-dimensional shape made of cheese, and, separately, a natural food preparation based, for example, on fruit, vegetables or seeds.

### Background

The pairing of cheese with sweet or sweet and sour preparations are one of the best known and renowned culinary combinations, widely appreciated and disseminated throughout the world. For example, cheese preparation are often paired with fruit preserves or honey using the amounts of cheese or fruit preserve preferred by the consumer, in order to obtain final more or less sweet flavor. Similarly, the chocolate is often combined with e.g. hot pepper or ginger based preparations, so to realize a final sensorial combination which is unique in terms of taste and aromas.

In this regard it should be noted that such combinations of flavors, in order to be appreciated and give rise to an optimal sensory effect, require the use of the right amount and variety of the cheese component and sweet or sweet and sour component (for example fruit preserve). Practically speaking, in case of, for instance, cheese, it is necessary to consider, on one hand, the type of milk used to prepare the cheese and any aging of the latter, and, on the other hand, the amount of sugar and/or intensity of the flavor of the preparation it is desired to pair with. Particular attention is also to be devoted to ensure that one of the two flavors does not overpower the other, thus becoming dominant and completely covering the other flavor. An improper sweet/savory pairing, in fact, can provoke an effect that is opposite to the desired one, i.e. the final flavor obtained is not very pleasing or is unnaturally altered. Another problem can be tied to the reproducibility of the final taste given by the combinations of the aromas, since it could be difficult to dose the ingredients in the same amount, and in an exact and substantially unchanged manner.

GB 316850 discloses a food product comprising an envelope of cheese of any shape or form containing a filling of butter, jam, marmalade, sausage meat or other foodstuff, either alone, or in layers of various substances, or mixed together.

EP 1929882 discloses a kit for the preparation of an edible dessert product, the kit comprising a first closed container that contains a dessert gel, the container constituting a mould for the gel and the gel being demouldable therefrom, and a second closed container containing a sauce composition which are suitable to be subjected to microwave heating. Anonymous "GNPD-Baked-Camembert Cheese Snacks" 1 July 2008 retrieved from the Internet "http://www.gnpd.com/sinatra/recordpage/941118/from_search/4aDEv rEP9Q/" discloses a kit of parts including a pack containing cheese and two separate packs of jam.

The applicant has now found that it is possible to combine the right amounts of cheese with a sweet, savory or sweet and sour natural food preparation using a kit of parts, which separately comprises a hollow three-dimensional piece made of cheese and a natural food preparation, preferably pre-dosed. In this manner, the two components can be simply and conveniently paired, making it possible to achieve the right sensory combinations and provide an appreciated practicality and reproducibility of use.

### Description of the drawings

Figure 1a: embodiment of the present kit of parts, in which the internal components are illustrated: 4 cheese elements in the shape of a hollow cube, and 4 snap-and-squeeze single-dose sachets containing honey.
Figure 1b: final packaging of the kit of the invention shown in figure 1a, with dimensions of approximately 8x8x2 cm, assembled and ready for use.
Figure 2: snap-and-squeeze single-dose sachet, in which the natural food preparation of the present kit of parts is contained.
Figure 3: final product obtainable using the present kit, which illustrates the pairing of a hollow cubic piece made of cheese, having dimensions of approximately 2x2x2 cm and a balsamic vinegar preparation.

### Summary of the invention

In a first aspect, the invention relates to a kit of parts according to claim 1.

In a further aspect, the invention relates to the use of the present kit to prepare a food product, characterized in that it is a solid hollow piece made of cheese containing a natural food preparation.

### Description of the invention

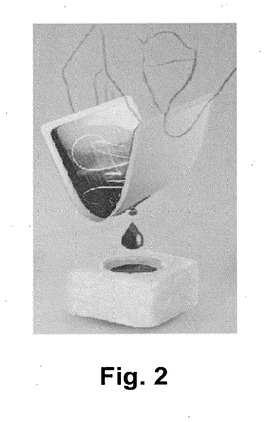

The present kit of parts allows the preparation of a final product in which the cavity of the solid piece of cheese is completely or partially filled with the preferred natural food preparation contained in one or more special containers, as illustrated, for example, in figure 2. Thanks to the present kit, in fact, the user can combine the two food components to achieve a final product with excellent organoleptic and sensory properties, with a series of advantages as described below in detail.

The term "hollow three-dimensional piece" indicates a three-dimensional piece having at least one concavity, more or less deep, formed on at least one face. Thanks to its shape, the three dimensional piece of the present kit can be paired with a certain amount of the chosen natural food preparation, included in the present kit in at least one container, as described below in detail.

"Partial concavity" is meant to indicate a cavity with a solid bottom, which can have a variable depth, and, for example, which can reach the centre of the piece, without involving the opposite face. "Complete concavity", on the other hand is meant to indicate a cavity that joins two opposite faces of the piece, thereby forming a sort of crown of cheese. In any case, the upper face of the concavity is not covered by any layer made of cheese, as indicated for instance in the appended figures. The choice of the type and capacity of the cavity can be made, for example, considering the intensity of the flavor of the selected ingredients to be coupled by means of the kit of the invention, or considering the aroma of the selected natural food preparation, so that it may be convenient to have larger or smaller amounts of the natural food preparation (namely larger or smaller volume of the cavity) to be combined to prepare the final product.

Non-limiting examples, of preferred shapes to be used in the present kit can be: hollow cube, parallelepiped, star, flower, heart, truncated cone, prism, sphere and the like, having at least one concavity, being the cube the preferred one.

Among the cheeses utilizable in the present invention, any type of cheese having a consistency that enables the formation of at least one concavity for combining the food components of the present kit can be used, namely a hard or semi-hard cheese. "Hard cheeses" means cheeses having a low water content (for example less than 40%), whereas "semi-hard cheeses" means cheeses having a water content generally comprised between 40 and 45%. In either case, both aged and fresh cheeses can be used, irrespective of whether they are made from cow's, goat's or sheep's milk.

Preferred, non-limiting examples of cheeses that can be used in the present invention are at least one of: Emmenthal, Pecorino, Bra, Grana cheese, Parmigiano Reggiano, Asiago, Montasio, Provolone, Caciocavallo, Mozzarella, Bettelmat, Gruyere, Toma, Valtellina Casera, Bitto, Fontina, Monte Veronese, Gorgonzola Verde and the like. In one particularly preferred embodiment, the cheese of the present kit is obtained by means of the process described in the co-pending Italian patent application No. MI2013A002121.

Preferably, the kit of parts of the invention comprises at least a hollow three-dimensional piece made of cheese having at least a partial or complete concavity.

Kit of parts of the invention may further comprise at least a hollow three dimensional piece made of chocolate. As far as the chocolate is concerned, this can be selected from at least one of: white, milk, dark and gianduja chocolate, this latter intended as made of chocolate and hazelnut paste. Dark chocolate can be selected in base, e.g., of the amount of cacao therein contained, such as 50%, 70% or even more.

When the hollow three dimensional piece is made of chocolate, the natural food preparation is preferably different from chocolate. In this embodiment, therefore, the chocolate three dimensional piece can be in fact coupled with fruit or vegetable jam, mostarda, and other ingredients as herein described in details, such as hot pepper or ginger based creams.

In a particular embodiment, the kit further comprises one or more three dimensional piece/s made of chocolate, and a preparation selected from at least one of: fruit or vegetable based jam or marmalade, honey, vinegar, balsamic vinegar, hot pepper or ginger based jams, marmalades or compotes. Particularly preferred are preparation selected from: fruit and vegetable mostarda, more preferably, pear and apple mostarda.

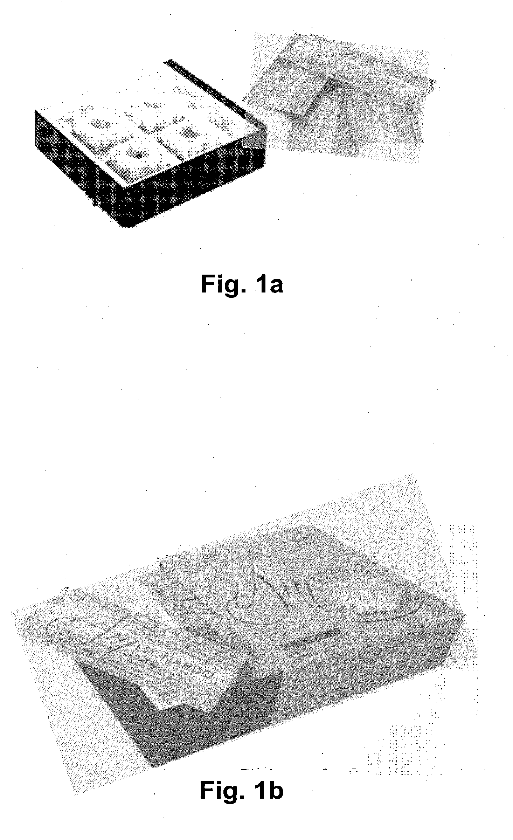

In any case, the selected hollow three dimensional pieces can be individually packaged or accommodated in special compartments of the kit, for example having the same shape as the hollow three-dimensional piece, as apparent from the appended figure 1. In this case, the compartments containing the hollow pieces can be sealed, for example with a heat-sealed film, so as to maintain the freshness of the product and avoid any contact with one or more containers of the natural food preparation, or with the outside packaging of the kit itself.

In any case, the kit of the invention makes it possible to combine the selected cheese in the appropriate hollow three-dimensional shape, with the most suitable natural food preparation, for example a sweet, sweet and sour, or savory one, so as to obtain a wide range of flavors in a simple and reproducible manner. Solely by way of example, for kits of the invention containing cheeses with an intense flavor (such as aged cheeses), it may be preferable to use a sweet natural preparation, for example honey or balsamic vinegar cream or glaze. For cheeses with a more delicate flavor, on the other hand, a pairing with natural preparations with a savory or sweet and sour flavor, for example containing hot red pepper, can prove to be optimal.

Therefore, thanks to the possibility of combining different types and amounts of the two food components (i.e. the hollow three-dimensional piece and the natural composition), the present kit enables the combination of flavors to be appreciated in a simple, practical manner, without any waste of raw materials.

As above introduced, the natural food preparation of the kit can be sweet, savory or sweet and sour and can also be liquid, solid or, preferably, semi-solid, such as in form of a food cream. "Food cream" means a physical form having a semi-fluid consistency, typical of, e.g. a syrup, a glaze or more generally, of the chocolate creams available in commerce.

Preferred liquid preparations are at least one of: vinegar, preferably apple, balsamic or wine vinegar cream, glaze and the like. In a particularly preferred embodiment, the vinegar is a balsamic aged vinegar.

In one embodiment, said preparation is obtained from fruit and/or vegetables. In this regard, the preferred preparations are selected from among one of: jams, preserves, compotes, mostarda and jelly, of fruit and/or vegetables. The terms "jam", "compote" and "preserve" comprise within their meaning any fruit and/or vegetable-based preparation (in pieces and/or homogenized) and sugar, which may or may not be cooked. As is well known, depending mainly on the sugar content, the percentage and form of the fruit or vegetables (i.e. in pieces or substantially homogeneous) and cooking times, such preparations are indicated in the art with the generic name of jam, compote or preserve. The term "mostarda", on the other hand, is meant to indicate, in general terms, a semi-solid preparation based on fruit or vegetables, sugar and mustard (as a general reference see: http://it.wikipedia.org/wiki/Mostarda).

Non-limiting examples of preferred fruits are selected from among: oranges, lemons, cherries, strawberries, apricots, pears, plums, figs, exotic fruits in general, apples and the like. Preferred vegetables can be pumpkins, onions, celery, fennel, hot red pepper, tomatoes, horseradish, ginger, rhubarb and the like.

Natural preparations obtained from seeds are equally particularly mustard. In a preferred embodiment, the natural composition is a chocolate cream (white, dark, milk or gianduja), and the three dimensional piece is made of cheese.

In a further embodiment, said natural preparation is honey, either single-flower or multi-flower, generally known with the name of millefiori. Non-limiting examples of honey are: orange, millefiori, chestnut, lime and the like.

The present kit can comprise the sweet, savory or sweet and sour natural food preparation packaged in at least one container, preferably sealed and/or closable or open. In one embodiment, said container is selected from among: vials, packages or thermoformed trays, bottles, tubes, rigid containers in general, or preferably tear-open or, more preferably, snap-and-squeeze sachets. The container can contain an amount of natural food preparation comprised between about 2 mL and 40 mL. In one embodiment, the container is a single-dose one, intended to be used for only one piece of cheese contained in the kit. In another embodiment, the container is a single dose suitable for the entire kit, containing, for example, 4 pieces of cheese. In this regard, the kit comprises at least one container having an amount of product comprised between about 2 mL and about 14 mL, even more preferably comprised between about 10 mL and 12 mL. In the case of single-dose containers for one piece of cheese the kit of the invention will be characterized in that it contains the same number of hollow pieces and single-dose containers, of the same, or even different, natural preparation. Advantageously, in this manner, it is possible to prepare kits having different combinations of the components, all highly reproducible and storable over time. In one equally preferred embodiment, the present kit comprises a container as here defined, for every 2 or every 4 pieces of cheese. Generally, the container has no air inside it, thus enabling prolonged storage of its contents. The natural food preparation of the invention is contained in at least one sealed snap-and-squeeze single-dose sachet, for example of the Easysnap® type (produced by Easypack solution SrL) as illustrated in figure 2.

Moreover, a snap-and-squeeze container proves to be particularly convenient from a practical viewpoint, as regards both disposal and use. The squeeze opening, in fact, makes it possible to measure out the flow of the natural preparation contained therein directly into the cavity of the three dimensional piece of cheese, without using additional means and without generating waste material deriving, e.g., from the breakage of the sachet. A further advantage of this type of preferred container lies in the fact that thanks to the control of the outflow during squeezing, the risk of spilling the contents outside the piece of cheese or chocolate is considerably reduced, thus avoiding inconvenience for the end consumer.

If the natural food preparation to be paired with the cheese with the present kit is in a semisolid, non-drip form (for example solid jelly), the present kit can also contain an additional component that the consumer can use for combining the food components of the kit. In this regard, said additional component is preferably an item of cutlery, a spoon, a plate, a spatula or a kitchen utensil having dimensions and characteristics in terms of shape and material that are suitable for being contained in the kit of the invention. For example, the kit can contain a compartment in which a hollow piece of cheese is accommodated, a compartment in which a sealed tray of fruit preserve is present, and a compartment accommodating a spatula that can be used to remove the fruit preserve from the tray and deposit it in the cavity of the cheese shape.

The kit of parts of the invention can be made using cellulosic material, typically cardboard, or also plastic or bioplastic material, preferably food-grade PET. In an equally preferred embodiment, the kit of the invention is made with recycled or recyclable material, so that a very low environmental impact is obtained. In this regard, in a further embodiment, the non-edible parts of the present kit are all made using the same type of material, even more preferably of cellulosic origin or food-grade PET.

By that, the disposal of the kit at the end of use is facilitated, since all of the residual components can be collected in a single waste bin.

The kit of the invention can be single-serving (i.e. containing one shape of cheese) or multi-serving, for example 2, 4, 6 or 8 servings, with combinations with the same or different natural preparations. A 4-serving embodiment, having dimensions of approximately 8x8x2cm is represented in figure la. Advantageously, it is possible to obtain, store, transport and reproduce a huge varieties of food combinations, being possible to combine, in a single kit, different types of hollow pieces of cheese and/or natural preparations, as described above in detail. The food components can be accommodated in the kit of the invention in separate containers or packaged individually in a single container. In other words, the kit can have separate compartments for accommodating the various components or it can have a single compartment containing the cheese shape, and one or more natural food preparations packaged individually, as illustrated, for example, in Fig. 1b.

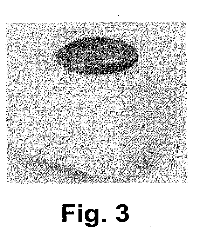

As described here in detail, the present kit of parts allows a direct interaction between the food components therein contained, as a necessary condition for the obtainment and reproducibility of the final food product, as represented, for example, in figure 3.

Thanks to the presence of the two separate components, moreover, it is possible to maintain the freshness and flavor of the foods also for a long time, unlike in cases where the final product is prepared and then packaged as an already combined product.

In a further preferred embodiment, the kit of the invention is a multi-portion case, containing different kinds of three-dimensional pieces, and separately, one or more natural composition as above indicated.

For instance, the kit of parts is in form of a rectangular or squared box including 2, 3, 4 or even more kits of parts, each of them comprising a multiplicity of three dimensional pieces and natural compositions. Alternatively, different kinds of three-dimensional pieces can be included within the same kit of parts, e.g. including one piece made of hard cheese, one made of semi-hard cheese, one made of dark chocolate and one made of milk chocolate. Advantageously in this case, the kit can comprise one or more natural composition included in suitable containers, preferably snap and squeeze as above described, readily available for all the possible combination. For instance in this respect, the kit can include cheese and chocolate, and separately a snap and squeeze container including a commonly combining ingredient, such as honey, jam, balsamic vinegar or the like.

In any case, the kit of parts of the invention allows the combination of suitable sensorial characteristics, thus enabling the enhancement of the taste of the combination of ingredients in an unique and highly reproducibly way.

Once again it has to be stressed that due to the peculiarity of the present kit of parts, it is possible to prepare final products with high reproducibility, and substantially without any product left. By that it is possible to prepare the final sensorial combination of aliments without wasting the starting products, in particular as far as the natural preparation is concerned. This is appreciated by the final consumer who can prepare final combinations of the components of the present kit, without weighting any component or without any particular worrying about the mistaken use of an excess or of a too small amount of natural composition. The right dose of natural composition as included in the present kit allows, in fact, the preparation of final products having optimal organoleptic features, which are also very easy to reproduce. It is important in this respect to highlight that the specific combinations obtainable using the kit of the invention are performed in such a way that the dosage is optimal, meaning that the amounts of the two component is in practice calibrated in order to better enhance the organoleptic features and the taste of the resulting combinations.

Finally, the end user can also purchase the present kit and by keeping it under suitable conditions (for example, chilled in a refrigerator) he/she can combine the food components contained therein even a number of days after the purchase date, while maintaining their sensory properties.

The ease of use and reproducibility of the final product, together with the fact that no food is wasted, makes the invention applicable also on a large scale, for example through large-scale retailers.

The extreme versatility of the kit makes it possible, finally, to vary the number, doses and/or the types of food components so as to obtain sensory combinations tailored to different demands of the consumer and target market.

## Claims

1. A kit of parts comprising at least:
a food product with a hollow three-dimensional shape, made of a hard or semi-hard cheese, preferably selected from at least one of: Emmenthal, Pecorino, Bra, Grana cheese, Parmigiano Reggiano, Mozzarella Asiago, Montasio, Provolone, Caciocavallo, Bettelmat, Gruyere, Toma, Valtellina casera, Bitto, Fontina, Monte Veronese and Gorgonzola Verde and separately
a pre-dosed natural food preparation, preferably honey or derived from fruit, vegetables or seeds, wherein said natural food preparation is contained in at least one sealed snap-and-squeeze sachet.

2. The kit of parts according to claim 1, wherein said natural food preparation is selected from at least one of: fruit or vegetables jam, compote, jelly or mostarda.

3. The kit of parts according to claim 1, wherein said natural food preparation is honey.

4. The kit of parts according to claim 1, wherein said natural food preparation is selected from: vinegar, balsamic vinegar or glaze.

5. The kit of parts according to claim 1, wherein said natural food preparation is selected from at least one of: white, dark, milk, or gianduja chocolate in creamy form.

6. The kit of parts according to the preceding claims, wherein said container comprises from 2 mL to 40 mL of said natural food preparation.

7. The kit of parts according to the preceding claims, wherein said container comprises from 2 mL to 14 mL of said natural food preparation, preferably 10 to 12 mL.

8. The kit of parts according to claims 1-11, wherein said sachet is a single-dose container intended for a single piece of food product or for a kit.

9. The kit of parts according to any one of the preceding claims, comprising the same number of hollow three-dimensional pieces of food product and of containers comprising the natural food preparation.

10. The kit of parts according to claims 1-9, comprising one container containing the natural food preparation for every 2 or 4 hollow three-dimensional pieces of food product.

11. The kit of parts according to any one of the preceding claims, further comprising: an item of cutlery, a spoon, a plate, a spatula or a kitchen utensil.

12. The kit of parts according to any one of the preceding claims, made of material of cellulosic origin or, preferably, of food-grade PET.

13. A use of the kit according to claims 1-12 to prepare a food product with a tridimensional solid hollow shape made of cheese and containing a natural food preparation.

## Patentansprüche

1. Set aus Einzelteilen, mindestens Folgendes umfassend:
ein Lebensmittelprodukt mit einer hohlen, dreidimensionalen Form, hergestellt aus einem Hart- oder Halbhartkäse, vorzugsweise ausgewählt aus mindestens einem der folgenden Bestandteile:
Emmentaler, Pecorino, Bra, Grana-Käse, Parmigiano Reggiano, Mozzarella Asiago, Montasio, Provolone, Caciocavallo, Bettelmat, Greyerzer, Toma, Valtellina casera, Bitto, Fontina, Monte Veronese und Gorgonzola Verde sowie separat eine vordosierte natürliche Nahrungsmittelzubereitung, vorzugsweise Honig oder gewonnen aus Obst, Gemüse oder Samen, wobei die natürliche Lebensmittelzubereitung in mindestens einem versiegelten Schnapp- und Quetschbeutel enthalten ist.

2. Set aus Einzelteilen nach Anspruch 1, wobei die natürliche Lebensmittelzubereitung aus mindestens einem der folgenden Bestandteile ausgewählt ist:
Obst- oder Gemüsemarmelade, Kompott, Gelee oder Senffrucht.

3. Set aus Einzelteilen nach Anspruch 1, wobei die natürliche Lebensmittelzubereitung Honig ist.

4. Set aus Einzelteilen nach Anspruch 1, wobei die natürliche Lebensmittelzubereitung ausgewählt ist aus:
Essig, Balsamico oder Glasur.

5. Set aus Einzelteilen nach Anspruch 1, wobei die natürliche Lebensmittelzubereitung aus mindestens einem der folgenden Bestandteile ausgewählt ist:
weiße Schokolade, dunkle Schokolade, Milchschokolade oder Gianduja-Schokolade in cremiger Form.

6. Set aus Einzelteilen nach den vorhergehenden Ansprüchen, wobei der Behälter 2 ml bis 40 ml der natürlichen Lebensmittelzubereitung enthält.

7. Set aus Einzelteilen nach den vorhergehenden Ansprüchen, wobei der Behälter 2 ml bis 14 ml der natürlichen Lebensmittelzubereitung, vorzugsweise 10 bis 12 ml, enthält.

8. Set aus Einzelteilen nach Anspruch 1 bis 11, wobei der Beutel ein Einzeldosis-Behälter ist, der für ein einzelnes Stück eines Lebensmittelprodukts oder für ein Set bestimmt ist.

9. Set aus Einzelteilen nach einem der vorhergehenden Ansprüche, umfassend die gleiche Anzahl von hohlen, dreidimensionalen Stücken eines Lebensmittelprodukts und von Behältern, die die natürliche Lebensmittelzubereitung enthalten.

10. Set aus Einzelteilen nach Anspruch 1 bis 9, umfassend einen Behälter mit der natürlichen Lebensmittelzubereitung für je 2 oder 4 hohle, dreidimensionale Teile des Lebensmittelprodukts.

11. Set aus Einzelteilen nach einem der vorhergehenden Ansprüche, ferner umfassend:
ein Besteck, einen Löffel, einen Teller, einen Spachtel oder ein Küchenutensil.

12. Set aus Einzelteilen nach einem der vorhergehenden Ansprüche, hergestellt aus Material zellulosehaltigen Ursprungs oder vorzugsweise aus lebensmittelechtem PET.

13. Verwendung des Sets nach den Ansprüchen 1 bis 12 zur Herstellung eines Lebensmittelproduktes mit einer dreidimensionalen, festen, hohlen Form aus Käse, das eine natürliche Lebensmittelzubereitung enthält.

## Revendications

1. Kit d'éléments comprenant au moins :
un produit alimentaire d'une forme tridimensionnelle creuse, fait d'un fromage dur ou semi dur, sélectionné de préférence parmi au moins un des fromages suivants : l'Emmental, le Pecorino, le Bra, le Grana, le Parmigiano Reggiano, la Mozzarella, l'Asiago, le Montasio, le Provolone, le Caciocavallo, le Bettelmatt, le Gruyère, la Toma, la Valtellina casera, le Bitto, la Fontina, le Monte Veronese et le Gorgonzola Verde et séparément
une préparation alimentaire naturelle pré-dosée, de préférence du miel ou issue de fruits, de légumes ou de graines, dans lequel ladite préparation alimentaire naturelle est contenue dans au moins un sachet scellé de type « snap and squeeze ».

2. Kit d'éléments selon la revendication 1, dans lequel ladite préparation alimentaire naturelle est sélectionnée parmi au moins une des préparations suivantes : de la confiture, de la compote, de la gelée ou de la « mostarda » de fruits ou de légumes.

3. Kit d'éléments selon la revendication 1, dans lequel ladite préparation alimentaire naturelle est du miel.

4. Kit d'éléments selon la revendication 1, dans lequel ladite préparation alimentaire naturelle est sélectionnée parmi : du vinaigre, du vinaigre balsamique ou un glaçage.

5. Kit d'éléments selon la revendication 1, dans lequel ladite préparation alimentaire naturelle est sélectionnée parmi au moins un des éléments suivants : du chocolat blanc, du chocolat noir, du chocolat au lait ou du chocolat gianduja sous forme crémeuse.

6. Kit d'éléments selon les revendications précédentes, dans lequel ledit récipient comprend de 2 mL à 40 mL de ladite préparation alimentaire naturelle.

7. Kit d'éléments selon les revendications précédentes, dans lequel ledit récipient comprend de 2 mL à 14 mL de ladite préparation alimentaire naturelle, de préférence de 10 à 12 mL.

8. Kit d'éléments selon les revendications 1 à 11, dans lequel ledit sachet est un récipient unidose destiné à une seule pièce de produit alimentaire ou à un kit.

9. Kit d'éléments selon l'une quelconque des revendications précédentes, comprenant le même nombre de pièces tridimensionnelles creuses de produit alimentaire et de récipients comprenant la préparation alimentaire naturelle.

10. Kit d'éléments selon les revendications 1 à 9, comprenant un récipient contenant la préparation alimentaire naturelle pour 2 ou 4 pièces tridimensionnelles creuses de produit alimentaire.

11. Kit d'éléments selon l'une quelconque des revendications précédentes, comprenant en outre : un couvert, une cuillère, une assiette, une spatule ou un ustensile de cuisine.

12. Kit d'éléments selon l'une quelconque des revendications précédentes, fabriqué dans un matériau d'origine cellulosique ou, de préférence, dans du PET alimentaire.

13. Utilisation du kit selon les revendications 1 à 12 pour préparer un produit alimentaire d'une forme creuse solide tridimensionnelle, fait de fromage et contenant une préparation alimentaire naturelle.
